(19) Europäisches Patentamt
European Patent Office
Office européen des brevets

(11) EP 2 166 024 A1

# (12) EUROPÄISCHE PATENTANMELDUNG

(43) Veröffentlichungstag:
**24.03.2010 Patentblatt 2010/12**

(21) Anmeldenummer: **09177995.9**

(22) Anmeldetag: **21.09.2005**

(51) Int Cl.:
***C08F 2/01*** (2006.01) ***B01J 19/00*** (2006.01)
***C08F 2/10*** (2006.01) ***C08F 6/10*** (2006.01)
***C08J 3/12*** (2006.01) ***C08J 3/24*** (2006.01)
***C08F 220/06*** (2006.01) ***C08F 220/56*** (2006.01)
***B01J 8/10*** (2006.01)

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.09.2004 DE 102004047528**
**22.10.2004 DE 102004051646**
**17.05.2005 DE 102005023325**

(62) Dokumentnummer(n) der früheren Anmeldung(en) nach Art. 76 EPÜ:
**05796468.6 / 1 799 721**

(27) Früher eingereichte Anmeldung:
**21.09.2005 EP 05796468**

(71) Anmelder: **BASF SE**
**67056 Ludwigshafen (DE)**

(72) Erfinder:
- **Stueven, Uwe**
**65812, Bad Soden (DE)**
- **Weismantel, Matthias**
**63637, Jossgrund (DE)**
- **Funk, Ruediger**
**65527, Niedernhausen (DE)**
- **Hillebrecht, Annemarie**
**36093, Künzell (DE)**
- **Van Esbroeck, Dominicus**
**210019, Nanjing (CN)**
- **Possemiers, Karl J.**
**2970, Schilde (BE)**
- **De Kaey, Ronny**
**2531, Vremde (BE)**

Bemerkungen:
Diese Anmeldung ist am 04-12-2009 als Teilanmeldung zu der unter INID-Code 62 erwähnten Anmeldung eingereicht worden.

## (54) Verfahren zur kontinuierlichen Herstellung von vernetzten feinteiligen gelförmigen Polymerisaten

(57) Verfahren zur kontinuierlichen Herstellung von vernetzten, feinteiligen, gelförmigen Polymerisaten durch Copolymerisierten von
a) wasserlöslichen, monoethylenisch ungesättigten Monomeren,
b) 0,001 bis 5 Mol-% bezogen auf die Monomere (a), mindestens zwei polymerisierbare Gruppen enthaltenden Monomeren
in einem Kneter mit einer Förderung der am Anfang des Kneters zugegebenen Stoffe in axialer Richtung zum Ende des Mischers, dadurch gekennzeichnet, dass die an einer Temperaturmessstelle in der Kneterwandung bei einem Abstand von 5 bis 6 % der Länge des inneren Reaktorraums in Richtung Produktaustrag von der Monomerdosierungsstelle gemessene Temperatur mehr als 65 °C beträgt.

EP 2 166 024 A1

## Beschreibung

Die vorliegende Erfindung betrifft ein Verfahren zur kontinuierlichen Herstellung von vernetzten feinteiligen gelförmigen Polymerisaten in einem Kneter.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

In der Herstellung von vernetzten feinteiligen gelförmigen Polymerisaten (z. B. Superabsorbern) werden neben Band- und Batch-Polymeristaion auch Kneterpolymerisation angewandt.

Bei den in dem Stand der Technik bekannten Kneterverfahren treten Nachteile auf, wie z.B. Neigung, dass größere Superabsorber Agglomerate im kontinuierlichen großtechnischen Herstellverfahren entstehen können. Diese Agglomerate müssen abgesondert werden und führen zu erhöhten Herstellkosten.

Aus der DE 34 32 690 ist ein Verfahren zur kontinuierlichen Herstellung von vernetzten Polymerisaten bekannt, bei dem man wasserlösliche Monomere in Gegenwart eines Vernetzers und von Initiatoren in einem Kessel polymerisiert, der mit einer Mehrzahl von parallel zueinander angeordneten rotierenden Rührerwellen ausgerüstet ist, die mit Rührerblättern versehen sind. Die Polymerisation wird kontinuierlich in einem Zweiarm-Typkneter oder beispielsweise in einem Dreischaftkneter durchgeführt. Bei diesem Reaktortyp findet eine so starke Rückvermischung statt, so dass die Monomerlösung auf das fein zerteilte wasserhaltige Gelpolymere gegeben wird und die Polymerisation des Monomeren auf der Oberfläche des Polymergels abläuft. Die so herstellbaren feinteiligen Polymerisatgele haben einen relativ hohen Restmonomergehalt.

Die EP 223 063 lehrt ein Verfahren zur kontinuierlichen Herstellung von vernetzten feinteiligen gelförmigen Polymerisaten in einem einwelligen zylindrischen Mischer, dessen Mischsegmente eine Förderung der Stoffe vom Anfang zum Ende des zylindrischen Mischers bewirken. Die eingesetzte Acrylsäure ist handelsüblich (MEHQ-Gehalt: 200 ppm) und der Füllgrad im Reaktor ist unbestimmt.

List, ein Hersteller Knetreaktoren mit Rückmischung empfiehlt einen Füllgrad von nicht mehr als 70%, insbesondere auch für die kontinuierliche Polymerisation von Superabsorbern (cav 6/2003 Seite 44/45). Außerdem wird dort empfohlen, dass Knetreaktoren für die kontinuierliche Polymerisation von SAP unter Rückvermischung betrieben werden. Dieser Empfehlung sind führende Superabsorberhersteller gefolgt.

In WO 01/38402 wird ein Verfahren zur Kontinuierlichen Herstellung von Superabsorber offenbart. Die eingesetzte Acrylsäure hat einen MEHQ-Gehalt von 180-200 ppm. Das Produkt aus Verweilzeit und Reaktionslösungszufluss beträgt in allen Beispielen 150kg oder weniger bei einem Reaktionsvolumen von 300 Liter.

In WO 03/22896 wird ein Verfahren zur kontinuierlichen Herstellung von Superabsorber in Kneter beansprucht, wobei handelsübliche Acrylsäure (200 ppm MEHQ) umgesetzt wird. Das Produkt aus Verweilzeit und Reaktionslösungszufluss beträgt in den Beispielen 6.2kg oder weniger bei einem Reaktionsvolumen von 30.9 Liter.

In WO 03/051940 wird ein Verfahren zur Herstellung von Superabsorber mit geringem MEHQ Gehalt offenbart. Die Superabsorber werden diskontinuierlich entweder durch adiabatische Polymerisation oder im Kneter hergestellt. Die in WO 03/051940 offenbarten und erfindungsgemäßen Verfahren zeigen während der Polymerisation eine Zeit für die Spitzentemperatur von 7 Minuten bis 24 Minuten und einen Restmonomergehalt von 190 bis 620 ppm.

Die Aufgabe der vorliegenden Erfindung ist daher unter anderem, ein einfaches Verfahren mit besseren Herstellkosten zur Verfügung zu stellen.

Überraschenderweise wurde gefunden ein Verfahren gefunden, dass die Nachteile des Standes der Technik überwindet.

Dies ist ein Verfahren zur kontinuierlichen Herstellung von vernetzten, feinteiligen, gelförmigen Polymerisaten durch Copolymerisieren von

a) wasserlöslichen, monoethylenisch ungesättigten Monomeren,
b) 0,001 bis 5 Mol-% bezogen auf die Monomere (a), mindestens zwei polymerisierbare Gruppen enthaltenden Monomeren

in einem Kneter mit einer Förderung der am Anfang des Kneters zugegebenen Stoffe in axialer Richtung zum Ende des Mischers, **dadurch gekennzeichnet, dass** mindestens eine der nachfolgenden Bedingungen erfüllt ist:

i) Füllgrad im Mischkneter beträgt mindestens 71% oder
ii) die wasserlöslichen, monoethylenisch ungesättigten Monomeren enthalten bis zu 150 ppm eines Halbethers eines Hydrochinons
iii) die Temperatur in der Polymerisationszone beträgt mehr als 65°C beträgt
iv) der Kneter weist ein Rückvermischungsverhältnis kleiner 0.33 auf.

Unter feinteilig wird bevorzugt in diesem erfindungsgemäßen Verfahren verstanden, dass Agglomerate mit einem längsten Durchmesser von > 10 mm zu weniger wie 15%, bevorzugt weniger als 12%, mehr bevorzugt weniger als 10% oder sogar weniger als 7%, besonders bevorzugt weniger als 5% oder sogar 4%, ganz besonders bevorzugt weniger als 3% oder sogar weniger als 2%, insbesondere weniger wie 1% oder sogar weniger wie 0.5% (jeweils Trockengewicht, bezogen auf Gesamtmasse getrocknetes Gel) auftreten.

Alternativ wird unter feinteilig ebenso bevorzugt in diesem erfindungsgemäßen Verfahren verstanden, dass Agglomerate mit einem längsten Durchmesser von > 5cm zu weniger wie 30 Agglomerate pro Stunde, bevorzugt weniger wie 10, besonders bevorzugt weniger wie 5, ganz besonders bevorzugt weniger wie 3, insbesondere weniger wie 2 oder sogar weniger wie 1 Agglomerate pro Stunde Betrieb auftreten.

Bevorzugt gelten die oben genannten kombinierten Grenzen an Agglomeraten (> 10 mm und > 5cm) in dem erfindungsgemäßen Verfahren.

Die vernetzten, gelförmigen Polymerisate werden beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben.

Die vernetzten, feinteiligen, gelförmigen Polymerisate weisen typischerweise eine Zentrifugenretentionskapazität von mindestens 15 g/g, vorzugsweise mindestens 20 g/g, besonders bevorzugt mindestens 25 g/g, auf. Die Zentrifugenretentionskapazität wird gemäß der von der EDANA (European Disposables and Nonwovens Association) empfohlenen Testmethode Nr. 441.2-02 "Centrifuge retention capacity" bestimmt.

Die wasserabsorbierenden Polymere weisen typischerweise eine Absorption unter Druck 0,7 psi von mindestens 15 g/g, vorzugsweise mindestens 20 g/g, besonders bevorzugt mindestens 25 g/g, auf. Die Absorption unter Druck wird gemäß der von der EDANA (European Disposables and Nonwovens Association) empfohlenen Testmethode Nr. 442.2-02 "Absorption under pressure" bestimmt.

Zur Herstellung wasserabsorbierender Polymere können wasserlösliche monoethylenisch ungesättigte, Monomere in Gegenwart von Vernetzern zu einem Grundpolymer umgesetzt werden. Die Polymerisation kann auch in Gegenwart einer geeigneten Pfropfgrundlage durchgeführt werden, wie in US 5,041,496 beschrieben. Die Reaktion kann beispielsweise als radikalische Lösungspolymerisation oder inverse Suspensionspolymerisation durchgeführt werden. Die radikalische Lösungspolymerisation ist bevorzugt.

Geeignete Monomere sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure.

Die Monomere, insbesondere Acrylsäure, enthalten in einer erfindungsgemäßen Alternative bis zu 150 ppm (Gewicht) Halbether eines Hydrochinons.

Unter Halbether eines Hydrochinons werden im allgemeinen Verbindungen der folgenden Formel verstanden:

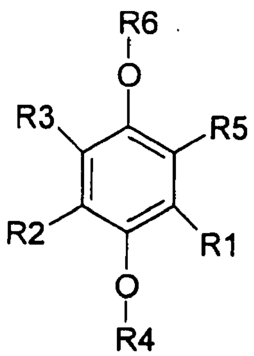

wobei $R^1$, $R^2$, $R^3$ und R5 unabhängig voneinander H oder einen Alkylrest mit 1 bis 20 Kohlenstoffen bedeutet, $R^4$ H oder Säurerest mit 1 - 20 Kohlenstoffatomen bedeutet und R6 einen Kohlenwasserstoffrest mit bis zu 20 Kohlenstoffatomen bedeutet, wobei R5 und R6 zusammen auch einen Carbocyclus bilden können.

Bevorzugte Halbether sind MEHQ (Monomethyletherhydrochinon) und/oder Tocopherole. Insbesondere ist MEHQ bevorzugt.

Unter Tocopherol werden Verbindungen der Folgenden Formel verstanden

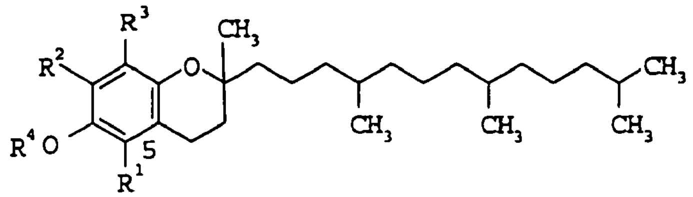

wobei $R^1$ H oder Methyl $R^2$ H oder Methyl $R^3$ H oder Methyl und $R^4$ H oder Säurerest mit 1 - 20 Kohlenstoffatomen bedeutet.

Bevorzugte Reste für $R^4$ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R1 = R2 = R3 = Methyl, insbesondere racemisches alpha-Tocopherol. R4 ist besonders bevorzugt H oder Acetyl. Insbesondere bevorzugt ist RRR-alpha-Tocopherol.

Die Halbether eines Hydrochinons sind dem Monomeren (a) bevorzugt zu 5- 130 ppm, besonders bevorzugt 30 bis 70 ppm, insbesondere um 50 ppm zugestzt.

Die wasserabsorbierenden Polymere sind vernetzt, d.h. die Polymerisation wird in Gegenwart von Verbindungen mit mindestens zwei polymerisierbaren Gruppen, bevorzugt ethylenisch ungesättigte Doppelbindungen, die in das Polymernetzwerk radikalisch einpolymerisiert werden können, durchgeführt.

Geeignete Monomere (b) (Vernetzer) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A 530 438 beschrieben, Di- und Triacrylate, wie in EP-A 547 847, EP-A 559 476, EP-A 632 068, WO 93/21237, WO 03/104299, WO 03/104300, WO 03/104301 und in der deutschen Patentanmeldung mit dem Aktenzeichen 103 31 450.4 beschrieben, gemischte Acrylate, die neben Acrylatgruppen weitere ethylenisch ungesättigte Gruppen enthalten, wie in den deutschen Patentanmeldungen mit den Aktenzeichen 103 31 456.3 und 103 55 401.7 beschrieben, oder Vernetzermischungen, wie beispielsweise in DE-A 195 43 368, DE-A 196 46 484, WO 90/15830 und WO 02/32962 beschrieben.

Die polymerisierbaren Gruppen werden vorzugsweise aus der Gruppe Allyl (z.B. Allylether- und Allylamingruppen), Acryloxy und Methacryloxy ausgewählt werden. Acryloxy und Methacryloxy sind besonders bevorzugt. Acryloxygruppen sind ganz besonders bevorzugt. Die Vernetzer können zwei, drei, vier oder mehr, vorzugsweise zwei, drei oder vier, besonders bevorzugt drei oder vier, polymerisierbare Gruppen enthalten. Die polymerisierbaren Gruppen im Vernetzer können gleich oder verschieden sein, beispielsweise kann der Vernetzer mindestens eine Acrylester-Gruppe und mindestens eine Allylether-Gruppe, mindestens eine Acrylester-Gruppe und mindestens eine Allylamin-Gruppe, mindestens eine Methacrylester-Gruppe und mindestens eine Allylether-Gruppe, mindestens eine Methacrylester-Gruppe und mindestens eine Allylamin-Gruppe, mindestens zwei Acrylester-Gruppen oder mindestens zwei Methacrylester-Gruppen, vorzugsweise mindestens eine Acryloxygruppe, besonders bevorzugt mindestens zwei Acryloxygruppen, enthalten.

Bevorzugte Vernetzer sind alkoxylierte Acrylester von Trimethylolpropan uns Glycerin oder Gemische hiervon.

Die Herstellung eines geeigneten Grundpolymers sowie weitere geeignete hydrophile ethylenisch ungesättigte Monomere und Vernetzer werden in DE-A 199 41 423, EP-A 686 650, WO 01/45758 und WO 03/104300 beschrieben.

Die Säuregruppen der erhaltenen Hydrogele sind üblicherweise teilweise neutralisiert, vorzugsweise zu 25 bis 85 mol-%, bevorzugt zu 27 bis 80 mol-%, besonders bevorzugt zu 27 bis 30 mol-% oder 40 bis 75%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium als Alkalimetalle besonders bevorzugt sind, ganz besonders bevorzugt jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung oder bevorzugt auch als Feststoff erreicht.

Die Neutralisation kann nach der Polymerisation auf der Stufe des Hydrogels durchgeführt werden. Es ist aber auch möglich bis zu 40 mol-%, vorzugsweise 10 bis 30 mol-%, besonders bevorzugt 15 bis 25 mol-%, der Säureguppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels einzustellt wird. Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden. Die Neutralisation der Monomerlösung auf den Endneutralisationsgrad ist bevorzugt.

Das neutralisierte Hydrogel wird dann mit einem Band- oder Walzentrockner getrocknet bis der Restfeuchtegehalt vorzugsweise unter 10 Gew.-%, insbesondere unter 5 Gew.-% liegt, wobei der Wassergehalt gemäß der von der EDANA (European Disposables and Nonwovens Association) empfohlenen Testmethode Nr. 430.2-02 "Moisture content" bestimmt wird. Das getrocknete Hydrogel wird hiernach gemahlen und gesiebt, wobei zur Mahlung üblicherweise Walzenstühle, Stiftmühlen oder Schwingmühlen eingesetzt werden können. Die Partikelgröße des gesiebten, trockenen Hydrogels beträgt vorzugsweise unter 1000 μm, besonders bevorzugt unter 850 μm, ganz besonders bevorzugt unter 700 μm, und vorzugsweise über 100 μm, besonders bevorzugt über 150 μm, ganz besonders bevorzugt über 200 μm.

Die Grundpolymere werden anschließend bevorzugt nachvernetzt. Hierzu geeignete Nachvemetzer sind Verbindungen, die mindestens zwei Gruppen enthalten, die mit den Carboxylatgruppen der Polymere kovalente Bindungen bilden können. Geeignete Verbindungen sind beispielsweise Alkoxysiliylverbindungen, Polyaziridine, Polyamine, Polyamidoamine, Di- oder Polyglycidylverbindungen, wie in EP-A 083 022, EP-A 543 303 und EP-A 937 736 beschrieben, mehrwertige Alkohole, wie in DE-C-33 14 019, DE-C-35 23 617 und EP-A-450 922 beschrieben, oder β-Hydroxyalkylamide, wie in DE-A-102 04 938 und US-6,239,230 beschrieben. Geeignet sind ferner Verbindungen mit gemischter Funktionalität, wie Glycidol, 3-Ethyl-3-Oxetanmethanol (Trimethylolpropanoxetan), wie in EP-A-1 199 327 beschrieben, Aminoethanol, Diethanolamin, Triethanolamin oder Verbindungen, die nach der ersten Reaktion eine weitere Funktionalität ausbilden, wie Ethylenoxid, Propylenoxid, Isobutylenoxid, Aziridin, Azetidin oder Oxetan.

Desweiteren sind in DE-A 40 20 780 zyclische Karbonate, in DE-A 198 07 502 2-Oxazolidon und dessen Derivate, wie 2-Hydroxyethyl-2-oxazolidon, in DE-A 198 07 992 Bis- und Poly-2-oxazolidinone, in DE-A 198 54 573 2-Oxotetrahydro-1,3-oxazin und dessen Derivate, in DE-A 198 54 574 N-Acyl-2-Oxazolidone, in DE-A 102 04 937 zyklische Harnstoffe, in der deutschen Patentanmeldung mit dem Aktenzeichen 103 34 584.1 bizyklische Amidacetale, in EP-A 11 99 327 Oxetane und zyklische Harnstoffe und in WO 03/031482 Morpholin-2,3-dion und dessen Derivate als geeignete Nachvernetzer v) beschrieben.

Die Nachvernetzung wird üblicherweise so durchgeführt, dass eine Lösung des Nachvernetzers auf das Hydrogel oder die trockenen Grundpolymerpartikel aufgesprüht wird. Im Anschluss an das Aufsprühen wird thermisch getrocknet, wobei die Nachvernetzungsreaktion sowohl vor als auch während der Trocknung stattfinden kann.

Das Aufsprühen der Nachvernetzerlösung wird vorzugsweise in Mischern mit bewegten Mischwerkzeugen, wie Schneckenmischer, Paddelmischer, Scheibenmischer, Pflugscharmischer und Schaufelmischer, durchgeführt. Besonders bevorzugt sind Vertikalmischer, ganz besonders bevorzugt sind Pflugscharmischer und Schaufelmischer.

Geeignete Mischer sind beispielsweise Lödige®-Mischer, Bepex®-Mischer, Nauta®-Mischer, Processall®-Mischer und Schugi®-Mischer.

Die thermische Trocknung wird vorzugsweise in Kontakttrocknem, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Besonders bevorzugt wird die Nachvernetzerlösung in einem Hochgeschwindigkeitsmischer, beispielsweise vom Typ Schugi-Flexomix® oder Turbolizer®, auf das Grundpolymer aufgebracht und in einem Reaktionstrockner, beispielsweise vom Typ Nara-Paddle-Dryer® oder einem Scheibentrockner, thermisch nachvernetzt. Das eingesetzte Grundpolymer kann aus vorhergehenden Prozessschritten noch eine Temperatur von 10 bis 120°C aufweisen, die Nachvernetzerlösung kann eine Temperatur von 0 bis 150°C aufweisen. Insbesondere kann Nachvernetzerlösung zur Verminderung der Viskosität erwärmt werden. Bevorzugt zur Nachvernetzung und Trocknung ist dabei der Temperaturbereich von 30 bis 220°C, insbesondere 150 bis 210 °C, besonders bevorzugt 160 bis 190°C. Die bevorzugte Verweilzeit bei dieser Temperatur im Reaktionsmischer oder Trockner beträgt unter 100 Minuten, besonders bevorzugt unter 70 Minuten, am meisten bevorzugt unter 40 Minuten.

Die Copolymerisation der Monomere der Gruppen (a) und (b) kann - sofern eine Änderung der Eigenschaften der Copolymerisate gewünscht wird - zusätzlich noch in Gegenwart von Monomeren der Gruppe (c) durchgeführt werden. Als Monomere der Gruppe (c) kommen beispielsweise Hydroxyethylacrylat, Hydroxypropylacrylat, Hydroxyethylmethacrylat, Hydroxypropylmethacrylat, Acrylnitril und/oder Methacrylnitril in Betracht. Außerdem eignen sich Ester der Acrylsäure oder Methacrylsäure mit 1 bis 18 Kohlenstoffatome enthaltenden einwertigen Alkoholen, z.B. Methylacrylat, Ethylacrylat, Propylacrylat, Isopropylacrylat, n-Butylacrylat, Isobutylacrylat, Hexylacrylat, 2-Ethylhexylacrylat, Stearylacrylat, die entsprechenden Ester der Methacrylsäure, Fumarsäurediethylester, Maleinsäurediethylester, Maleinsäuredimethylester, Maleinsäuredibutylester, Vinylacetat und Vinylpropionat. Sofern die Monomere der Gruppe (c) zur Modifizierung der wasserlöslichen Polymerisate verwendet werden, setzt man diese im Allgemeinen mit unter 50 Mol-% bezogen auf Monomere (a) ein, vorzugsweise 0,5 bis 20 Mol-%, insbesondere 2 bis 10 Mol-% bezogen auf die Monomere (a) ein.

Die wasserunlöslichen Monomere können, falls sie bei der Copolymerisation miteingesetzt werden, mit Hilfe von Emulgatoren in der wäßrigen Lösung fein verteilt werden. Geeignete Emulgatoren sind beispielsweise ethoxylierte Nonylphenole, ethoxyliertes Ricinusöl, Alkylsulfate, Sorbitanfettsäureester, ethoxylierte Sorbite, ethoxylierte Sorbitanfettsäureester und Alkylsulfonate. Die Emulgatoren werden in einer Menge von 0 bis 3 Gew.-% bezogen auf die Monomere

(a) eingesetzt.

Die Polymerisation kann gegebenenfalls in Gegenwart der üblichen Polymerisationsregler erfolgen. Geeignete Polymerisationsregler sind beispielsweise Thioverbindungen, wie Thioglykolsäure, Mercaptoalkohole, z.B. 2-Mercaptoethanol, Mercaptopropanol und Mercaptobutanol, Dodecylmercaptan, Ameisensäure, Ammoniak und Amine, z.B. Ethanolamin, Diethanolamin, Triethanolamin, Triethylamin, Morpholin und Piperidin.

Die Monomere (a), (b) und gegebenenfalls (c) werden in 20 bis 80, vorzugsweise 20 bis 50, insbesondere 30 bis 45 gew.-%iger wäßriger Lösung in Gegenwart von Polymerisationsinitiatoren miteinander copolymerisiert. Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxkatalysatoren. Bevorzugt ist der Einsatz von wasserlöslichen Katalysatoren. In manchen Fällen ist es vorteilhaft, Mischungen verschiedener Polymerisationsinitiatoren zu verwenden, z.B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butylper-2-ethylhexanoat, tert.-Butylperisononanoat, tert.-Butylpermaleat, tert.-Butylperbenzoat, tert.-Butylper-3,5,5-tri-methylhexanoat und tert.-Amylpemeodekanoat. Weitere geeignete Polymerisationsinitiatoren sind Azostarter, z.B. 2,2'-Azobis-(2-amidinopropan)dihydrochlorid, 2,2'-Azobis-(N,N-dimethylen)isobutyramidin-dihydrochlorid, 2-(Carbamoylazo)isobutyronitril und 4,4'-Azobis-(4-cyanovaleriansäure). Die genannten Polymerisationsinitiatoren werden in üblichen Mengen eingesetzt, z.B. in Mengen von 0,01 bis 5, vorzugsweise 0,1 bis 2 Mol%, bezogen auf die zu polymerisierenden Monomere.

Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetall-hydrogensulfit, - sulfit, -thiosulfat, -hyposulfit, -pyrosulfit oder -sulfid, Metallsalze, wie Eisen-II-ionen oder Silberionen oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man $1 \cdot 10^{-5}$ bis 1 Mol.-% der reduzierenden Komponente des Redoxkatalysatorsystems und $1 \cdot 10^{-5}$ bis 5 Mol.-% der oxidierenden Komponente des Redoxkatalysators. Anstelle der oxidierenden Komponente des Redoxkatalysators oder zusätzlich kann man auch einen oder mehrere wasserlösliche Azostarter verwenden.

Bevorzugt wird im erfindungsgemäßen Verfahren ein Redoxsystem bestehend aus Wasserstoffperoxid, Natriumperoxodisulfat und Ascorbinsäure eingesetzt. In einer üblichen Ausführungsform werden diese Komponenten in den Konzentrationen $1 \cdot 10^{-2}$ Mol.-% Wasserstoffperoxid, 0,084 Mol.-% Natriumperoxodisulfat und $2{,}5 \cdot 10^{-3}$ Mol.-% Ascorbinsäure bezogen auf die Monomere eingesetzt.

Die wässrige Monomerlösung kann den Initiator gelöst oder dispergiert enthalten. Die Initiatoren können jedoch auch getrennt von der Monomerlösung dem Mischkneter zugeführt werden.

Die Monomerlösung wird vor der Polymerisation von Restsauerstoff befreit. Dies geschieht mittels Inertgas, welches im Gleichstrom, Gegenstrom oder dazwischenliegenden Eintrittswinkeln eingeleitet werden kann. Eine gute Durchmischung kann beispielsweise mit Düsen, statischen oder dynamischen Mischern oder Blasensäulen erzielt werden.

Die Monomerlösung wird ebenfalls mit einem Inertgasstrom durch den Reaktor geführt. Bevorzugt beträgt der Massendurchsatz an Monomerlösung mindestens 500, bevorzugt mindestens 1000, besonders bevorzugt mindestens 2000 und insbesondere mindestens 3000 kg/hm$^3$ (Reaktorvolumen) und der Inertgasstrom mindestens 100 l/hm$^3$ (Reaktorvolumen).

Als Inertgase können unabhängig voneinander Wasserdampf, Stickstoff, ein Edelgas wie Argon, Kohlenmonoxid, Kohlendioxid, Schwefelhexafluorid oder Mischungen dieser Gase verwendet werden. Dabei ist es möglich das Inertgas ganz oder teilweise durch eine chemische Reaktion im Mischkneter zu erzeugen. Bevorzugt wird Wasserdampf, Kohlendioxid und/oder Stickstoff als Inertgas eingesetzt.

Das Reaktorvolumen kann je nach gewünschtem Umsatz variieren. Vorzugsweise beträgt das Reaktorvolumen mindestens 0,5 m$^3$, mehr bevorzugt mindestens 0,7 m$^3$, besonders bevorzugt 1 bis 25 m$^3$ und insbesondere 3 bis 12 m$^3$. Während an der Zugabestelle der Monomeren in den Mischer die Stoffe in flüssiger Form vorliegen geht die Konsistenz der Reaktionsmischung über einen hochviskosen Zustand in ein krümeliges Gel über, das durch die kontinuierliche Förderwirkung des Mischers am Ende des Mischers ausgetragen wird. Bei der Polymerisation entsteht ein Gel, das im Mischer zu einem feinteiligen krümeligen Gel zerteilt und als solches dann ausgetragen wird. Bevorzugt ist dabei, dass während der Polymerisation im Mischer ein Teil des Wasser entfernt wird, so dass am Ende des Mischers krümelige Gelteilchen mit einem Feststoffgehalt von 20 bis 100 Gew.-% anfallen.

Der Füllgrad im Kneter wird im Bereich des krümeligen Gels gemessen. Erfindungsgemäß wird der Bereich des krümeligen Gels definiert durch den Bereich ab dem im Knetervolumen mindestens 50 gelförmige Teilchen pro Liter Reaktorvolumen vorliegen.

Der Füllgrad berechnet sich zu dem Quotienten aus (Masse von gelförmigen Polymerisaten / Schüttdichte) /

Bereich im Kneter mit krümeligen Gel.

Der Füllgrad beträgt mindestens 71%, bevorzugt höchstens 99%, mehr bevorzugt ist ein Bereich zwischen 73 und 95%, besonders bevorzugt ein Bereich zwischen 75% und 90%, insbesondere 80 bis 85%.

Unter der Polymerisationszone im Kneter wird die Zone verstanden, bei der bis zu 70% des Umsatzes der Polymerisation stattfindet. Der Umsatz kann gemessen werden, indem der Restmonomerengehalt im Gel bestimmt wird, Der größte Teil der Polymerisation findet im ersten Viertel des Kneters statt. Die Temperaturmessstelle zur Messung der Temperatur und Temperaturschwankungen in der Polymerisationszone befindet sich in der Wandung des Kneters. Geeignete Positionen für die Temperaturmessung liegen in einem Abstand von 5 bis 6% der Reaktorlänge in Richtung Produktaustrag von der Monomerdosierungsstelle. Wird das Monomer z.B. bei 4 % der Reaktorlänge zudosiert, befinden sich geeignete Stellen bei 9 bis 10% der Reaktorlänge. Unter Reaktorlänge wird die Länge des inneren Reaktorraums verstanden. Unter Temperaturschwankung wird die Differenz der Maximal und Minimaltemperatur an der Messstelle innerhalb einer Stunde verstanden.

Es wurde überraschenderweise gefunden, dass weniger Agglomerate in einem Kneter mit Rückvermischung auftreten, wenn die Temperatur in der Polymerisationszone mehr als 65°C, bevorzugt mehr als 70°C, mehr bevorzugt mehr als 75°C, besonders bevorzugt mehr als 80°C, insbesondere mehr als 85°C beträgt. Die Obergrenze der Temperatur in der Polymerisationszone ist im allgemeinen bei 100°C, bevorzugt bei 96°C. In einer besonders bevorzugten Ausführungsform liegt die Temperaturschwankungen pro Stunde unter 20°C, bevorzugt 15°C, besonders bevorzugt 10°C, insbesondere 5°C liegen.

Beim Betrieb von kontinuierlichen Knetreaktoren sind bezüglich dem Verweilverhalten zwei Parameter für die Qualität des erzeugten Produktes von großer Bedeutung, und zwar die durchschnittliche Verweilzeit der umzusetzenden Rohstoffe in dem Reaktor und die Verweilzeitverteilungsbreite.

Die Verweilzeit gibt an, wie lange sich das Material vom Zeitpunkt der Zuführung bis zum Verlassen des Reaktors in dem Reaktor befindet. Sie wird zum Beispiel beeinflusst durch das innere Volumen des Reaktors, die Geschwindigkeit der Rohstoffzuführung und den Füllstand. Aus betriebswirtschaftlicher Sicht wird man üblicherweise die Verweilzeit möglichst kurz halten um die Raum/Zeit-Ausbeute zu optimieren.

Da sich manche Teilchen mehr oder weniger lang in dem Reaktor befinden können, ist die Verweilzeit für alle Teilchen etwas unterschiedlich. Es tritt eine so genannte Verweilzeitverteilungsbreite auf. Diese lässt sich zum Beispiel durch die Konstruktion der Kneterwellen beeinflussen, indem durch die Wellengeometrie ein mehr oder weniger stark ausgeprägter Rück- und Vorwärtstransport des Materials verursacht wird. Dabei wird umzusetzende Material mittels einer Rührwelle, an der Rührschaufeln und Knethaken befestigt sind, vorwärts transportiert. Gleichzeitig findet allerdings ein Rücktransport des Gels statt, indem ein Teil der Rührschaufeln in der Weise im Kneter angebracht ist, dass der Transportstrom in die entgegengesetzte Richtung läuft.

Das Maß der Rückvermischung kann weiterhin beeinflusst werden über Variation der Füllhöhe (Wehr am Kneterausgang) sowie Dosiergeschwindigkeit am Knetereingang bzw. an verschiedenen Stellen im Kneter (verschiedene mögliche Zuschläge) sowie Änderungen in der Rotationsgeschwindigkeit der Rührwellen und gezielte Rückförderzonen.

Wird aus Qualitätsgründen eine breite Verweilzeitverteilung bevorzugt, etwa um Qualitätsschwankungen des erzeugten Materials auszugleichen, so wird man üblicherweise Kneter mit einer breiten Verweilzeitverteilung auswählen.

Es wurde aber überraschenderweise gefunden, dass bei Knetern mit einem Rückvermischungsverhältnis kleiner 0.33 bessere Polymere erhalten werden. Bevorzugt ist ein Rückvermischungsverhältnis kleiner 0.3, mehr bevorzugt kleiner 0.27, besonders bevorzugt kleiner 0.26 oder sogar kleiner 0.25, insbesondere kleiner 0.24. Das Rückvermischungsverhältnis ist dabei der Quotient aus Verweilzeitverteilung und mittlerer Verweilzeit.

Das Rückvermischungsverhältnis kann durch Zugabe und Messung der Verweilcharakteristik eines Tracer gemessen werden. Das Rückvermischungsverhältnis ergibt sich zu (A+B)/2C, mit

C entspricht Zeitraum vom Start der Zugabe des Tracers bis zum Erreichen des 50% Wertes der kumulierten Tracermenge am Kneterausgang,

A entspricht Zeitraum des Anstieges der Tracermenge am Kneterausgang von 5% auf 95% des Maximalwertes, und

B entspricht Zeitraum des Abfalls der Tracermenge am Kneterausgang von 95% auf 5% des Maximalwertes.

Die Temperatur und die Temperaturschwankung kann in den erfindungsgemäßen Bereich gebracht werden durch einen hohen Füllgrad von mindestens 71% oder auch durch die Zudosierung von Feinpartikeln des Polymerisats. Unter Feinpartikeln werden Partikel des Polymerisationsproduktes verstanden, die gegebenenfalls oberflächennachvernetzt sind und einen durchschnittliche Teilchengröße unter 300μm, bevorzugt unter 250μm, insbesondere unter 200μm aufweisen. Die Feinpartikel haben im allgemeinen ein Wassergehalt unter 30 Gew.%, bevorzugt unter 20 Gew. %. Die Feinpartikel werden im allgemeinen nach 90% Polymerisationsumsatz, bevorzugt nach 95%, besonders bevorzugt nach 99% und insbesondere nach 99,5% Umsatz zugegeben. Dabei werden üblicherweise zwischen 5 und 30 Gew.%, bevorzugt zwischen 10 und 20 Gew. Feinpartikel bezogen auf trocknes Polymer (ohne Feinpartikel) zugegeben. Es

können die Feinpartikel auch an mehreren Stellen im Kneter zugegeben werden.

Bevorzugt sind Kneter mit mindestens zwei achsparallel rotierenden Wellen, wobei sich auf den Wellen mehrere Knet- und Transportelemente befinden, ausgestattet ist.

Im erfindungsgemäßen Verfahren einsetzbare Mischkneter sind von der Firma List erhältlich und beispielsweise in der CH-A 664 704, EP-A 517 068, WO 97/12666, DE-A 21 23 956, EP-A 603 525, DE-A 195 36 944 und DE-A 41 18 884 beschrieben.

Solche Kneter mit 2 Wellen erzielen durch die Anordnung der Knet- und Transportelemente eine hohe Selbstreinigung, die für eine kontinuierliche Polymerisation eine wichtige Anforderung ist. Vorzugsweise rotieren die beiden Wellen gegenläufig zueinander.

Auf der Rührwelle sind die Scheibensegmente propellerartig angeordnet. Als Knet- und Transportelemente sind z.B. wandgängige Mischbarren sowie L- oder U-förmig ausgeformte Aufsätze geeignet.

Die Reaktion kann auch unter reduziertem Druck bei 100 - 800 mbar, insbesondere 200 bis 600 mbar durchgeführt werden.

Der Mischkneter kann nach Bedarf beheizt oder gekühlt werden. Die Monomerlösung wird darin bei einer Temperatur in dem Bereich von -10°C, bevorzugt 0°C bis 140°C bevorzugt 100°C polymerisiert. Bevorzugt beträgt die Temperatur 30 bis 120°C und insbesondere die maximale Temperatur 50 bis 100°C, besonders bevorzugt höchstens 95°C und insbesondere höchstens 90°C.

Bevorzugt wird das erfindungsgemäße Verfahren so durchgeführt, dass der Anteil der Wärmeabfuhr durch Verdampfung von Wasser aus dem Reaktionsgemisch mindestens 5 %, bevorzugt mindestens 15 % und besonders bevorzugt mindestens 25 % der Reaktionswärme beträgt.

Ferner werden Verfahrensvarianten bevorzugt bei denen der Anteil der Wärmeabfuhr durch den Produktaustrag mindestens 25 % bevorzugt mindestens 45 % und insbesondere mindestens 55 % der Reaktionswärme beträgt.

Bevorzugt werden Verfahren, bei denen die Reaktionswärme zu insgesamt mindestens 50 %, besonders bevorzugt zu mindestens 70 % und insbesondere zu mindestens 90 % durch Produktaustrag und Wasserverdampfung abgeführt wird.

Nach einer ganz besonders bevorzugten Verfahrensvariante wird die Reaktorinnenwand und/oder mindestens eine, bevorzugt alle Wellen gekühlt.

Das bei der Polymerisation anfallende Gel hat einen Wassergehalt von 0 bis 80 Gew.-%, bevorzugt von 40 bis 70 Gew.-%. Dieser relativ geringe Feuchtigkeitsgehalt bei bereits rieselfähigem Gel, das nicht verklumpt, senkt die anschließend zur Trocknung aufzubringende Energie.

Das bei der Polymerisation anfallende Gel hat bevorzugt einen Restmonomerengehalt von unter 170 ppm, bevorzugt 160 ppm und weniger. Auch Werte von 150 ppm und weniger, 120 ppm und weniger, und sogar 100 ppm und weniger können mit dem erfindungsgemäßen Verfahren erreicht werden.

Das Herstellverfahren zeichnet sich durch geringe Verweilzeiten im Reaktor und damit eine gute Raum/Zeit Ausbeute aus. So werden selbst bei Verweilzeiten unter 30 Minuten bei einem Reaktorvolumen von mindestens 500 l feinteilige gelförmige Polymerisate mit einem sehr geringen Restmonomergehalt gefunden. Dies erspart die sonst aufwendigen Abtrennverfahren und erhöht die Ausbeute. Besonders bevorzugt werden Verfahrensvarianten mit einem hohen Massendurchsatz, der Verweilzeiten unter 20 Minuten und sogar unter 10 Minuten ermöglicht.

Die Zeit bis die Spitzentemperatur erreicht wird (Peak-Temperatur) liegt in dem erfindungsgemäßen Verfahren bevorzugt bei 5 Minuten und weniger besonders bevorzugt im Bereich von 2 bis 4 Minuten. In diesem Bereich liegt das Optimum bezüglich Durchsatz im Reaktor und Produktqualität (wenig Agglomerate, gute Restmonomerenwerte etc.).

Das den Reaktor verlassende Polymergel kann im Anschluss in einem Verweilbehälter bei Temperaturen von 50 bis 120°C vorzugsweise 80 bis 100°C gelagert werden. Die Verweilzeit beträgt in der Regel 3 Minuten bis 3 Stunden, vorzugsweise 5 bis 30 Minuten. Der Behälter kann ein nach oben offener Behälter sein, möglich ist jedoch auch ein verschlossener Behälter, an den ein leichtes Vakuum oder leichten Überdruck angelegt wird.

Der Trocknungsschritt kann nach allen bekannten Verfahrensweisen erfolgen, z.B. in einer Wirbelschicht, auf einem Umlufttrocknungsband, Vakuumtrocknungsband oder mit Hilfe einer Mikrowellentrocknung, oder bevorzugt unter vermindertem Druck in einem einwelligen Kneter unter intensivem Durchkneten des Polymergels. Dieser Trocknungsschritt wird vorzugsweise in einem ein- oder mehrwelligen Kneter bei einem Druck von 5 bis 300, vorzugsweise 20 bis 70 mbar und Temperaturen von 30 bis 170 C durchgeführt. Nach dem Trocknen erhält man ein rieselfähiges Polymergel, das eine sehr hohe Wasseraufnahme hat und als Bodenverbesserungsmittel bzw. als Absorptionsmittel in Hygieneartikeln, z.B. Windeln Verwendung finden kann. Die in den Beispielen angegebenen Teile sind Gewichtsteile, die Angaben in Prozent beziehen sich auf das Gewicht der Stoffe.

Beschreibung der Testmethoden:

Die Bestimmung der Zentrifugenretentionskapazität wurde analog zur von der EDANA (European Disposables and Nonwovens Association) empfohlenen Testmethode Nr. 441.2-02 "Centrifuge retention capacity" durchgeführt.

Zur Bestimmung der Zentrifugenretentionskapazität wurden 0,2000 ± 0,0050 g getrocknetes wasserabsorbierendes Polymer (Kornfraktion 106 bis 850 µm) in einem 60 x 85 mm großen Teebeutel eingewogen, der anschließend verschweißt wurde. Der Teebeutel wurde für 30 Minuten in einen Überschuss einer 0,9 gew.-%igen Kochsalzlösung bzw. einer 10 gew.-%igen wässrigen Lösung eines Alkalialzes einer nichtpolymeren Carbonsäure gegeben (mindestens 0,83 l Lösung/1 g Polymerpulver). Anschließend wurde der Teebeutel 3 Minuten lang bei 250 G zentrifugiert. Die Bestimmung der vom wasserabsorbierenden Polymer festgehaltenen Flüssigkeitsmenge geschieht durch Auswägen des zentrifugierten Teebeutels.

Die Bestimmung der Restmonomeren wurde gemäß der von der EDANA (European Disposables and Nonwovens Association) empfohlenen Testmethode ERT Nr. 410.2-02 "Determination of the Residual Monomers" durchgeführt.

Die "Peak"-Temperatur wurde gemessen als Zeitdifferenz zwischen Initiatorzugabe und maximaler Temperatur im entstehenden Gel.

Absorption unter Gewichtsbelastung AUL 0,7 psi (4826,5 Pa)

Die Messzelle zur Bestimmung der AUL 0,7 psi (4826,5 Pa) ist ein Plexiglas-Zylinder mit einem Innendurchmesser von 60 mm und einer Höhe von 50 mm, der an der Unterseite einen angeklebten Edelstahl-Siebboden mit einer Maschenweite von 36 mm besitzt. Zu der Messzelle gehört weiterhin eine Plastikplatte mit einem Durchmesser von 59 mm und ein Gewicht, welches zusammen mit der Plastikplatte in die Messzelle hineingestellt werden kann. Das Gewicht der Plastikplatte und des Gewichts beträgt zusammen 1345 g. Zur Durchführung der Bestimmung der AUL 0,7 psi (4826,5 Pa) wird das Gewicht des leeren Plexiglas-Zylinders und der Plastikplatte gemessen und als Wo notiert. Dann werden 0,900 ± 0,005 g hydrogel-formendes Polymer (Korngrößenverteilung: 150 - 800 µm) in den Plexiglas-Zylinder eingewogen und möglichst gleichmäßig auf dem Edelstahl-Siebboden verteilt. Anschließend wird die Plexiglasplatte vorsichtig in den Plexiglaszylinder hineingelegt, die gesamte Einheit gewogen und das Gewicht als $W_a$ notiert. Nun wird das Gewicht auf die Plastikplatte in dem Plexiglas-Zylinder gestellt. In die Mitte einer Petrischale mit einem Durchmesser von 200 mm und einer Höhe von 30 mm wird eine keramische Filterplatte mit einem Durchmesser von 120 mm und der Porosität 0 gelegt und soviel 0,9 gew.-%ige NatriumchloridLösung eingefüllt, dass die Flüssigkeitsoberfläche mit der Filterplattenoberfläche abschließt, ohne das die Oberfläche der Filterplatte bedeckt wird. Anschließend wird ein rundes Filterpapier mit einem Durchmesser von 90 mm und einer Porengröße <20 mm (Schwarzband 589 von Schieicher & Schüll) auf die keramische Filterplatte gelegt. Der hydrogel-formendes Polymer enthaltende Plexiglaszylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglaszylinder entfernt. Der gequollenes Hydrogel enthaltende Plexiglaszylinder wird zusammen mit der Plastikplatte ausgewogen und das Gewicht als $W_b$ notiert. Die AUL 0,7 psi (4826,5 Pa) berechnet sich gemäß:

$$\text{AUL } 0{,}7 \text{ psi} = [W_b - W_a] / [W_a - W_O]$$

Analog kann die AUL(40g/cm$^2$) durch Beaufschlagung mit geringeren Gewichten gemessen werden.

Vorschrift zur Schüttdichtemessung des feuchten Superabsorbergels:

Zur Bestimmung der Schüttdichte der feuchten Superabsorbergelteilchen wird ein 1 Liter Becherglas auf einer Laborwaage (Messbereich 5kg) tariert.

Anschließend wird das Becherglas mit noch warmen frischen Gelteilchen direkt nach der Polymerisation bis zur Marke von 1 Liter locker befüllt ohne diese zu verdichten, wobei der Schüttkegel durch seitliches Verteilen eingeebnet werden muß. Dabei werden Gelbrocken > 5cm Durchmesser aussortiert. Die Messung ist zügig innerhalb von 5 Minuten durchzuführen um eine Verfälschung durch Wasserverdampfung zu vermeiden. Bei der Durchführung der gesamten Messung ist darauf zu achten, dass kein Druck von oben auf das Gel ausgeübt wird um eine Verdichtung der Gelpartikel zu verhindern.

Das Schüttgewicht des Gels ergibt sich dann durch erneutes Wiegen des befüllten Becherglases nach folgender Formel in Gramm pro Liter [g/l]:

$$\text{Schüttgewicht} = (\text{Becherglas mit Gel in g}) - (\text{Becherglas leer in g})$$

Messung einer Rückvermischung bei Verwendung eines kontinuierlichen Kneters zur Polymerisation bei der Herstellung von Superabsorbern

Bestimmen lassen sich Verweilzeit und Verweilzeitverteilungsbreite und damit die Rückvermischungseigenschaften durch recht einfache Experimente:

Während des laufenden kontinuierlichen Betriebes werden am Zulauf des Kneters nach dem Prinzip eines Ein/ Ausschafters geeignete Marker über einen bestimmten Zeitraum, zum Beispiel eine Stunde, zugesetzt. Im einfachsten Fall kann hier ein Farbstoff verwendet werden, jedoch wird zum Beispiel Kalilauge, Calciumchlorid-, Aluminiumsulfat- oder Kaliumsulfatlösung bevorzugt, da diese bei der Herstellung von Superabsorbern im wesentlichen keinen Einfluss auf die Qualität des Endproduktes haben. Es lässt sich dann relativ einfach am Kneteraustrag durch Probennahme in geeigneten Zeitabständen und deren Analyse der variierende Gehalt des zugesetzten Materials analytisch bestimmen. Als Beispiel sei hier Aluminiumsulfatlösung verwendet.

Nach Einschalten einer kontinuierlichen Zudosierung an Aluminiumsulfatlösung am Knetereingang beginnt die Zeitmessung. Es dauert eine Weile, bis Aluminium am Kneterausgang nachgewiesen werden kann. Es steigt der Aluminiumgehalt an und der Aluminiumgehalt läuft gegen einen Grenzwert. Dieser Grenzwert ergibt sich aus der Menge der pro Zeit zudosierten Aluminiumsulfatiösung bezogen auf alle Zuschläge in den Knetreaktor abzüglich etwaiger Verluste durch Verdampfung oder Verdunstung zu 100% (= Maximalmenge der Aluminiumkonzentration im Austrag).

Die mittlere Verweilzeit ergibt sich nun aus der Zeitspanne zwischen dem Anschalten der Markerzudosierung und dem Zeitpunkt, wann die Aluminiumkonzentration einen Wert von 50% des theoretischen Endwertes erreicht.

Die Verweilzeitverteilungsbreite ergibt sich aus der ansteigenden bzw. abfallenden Flanke der Tracerkonzentration.

Bei der Ermittlung der Verweilzeitverteilungsbreite ist zu berücksichtigen, dass nach theoretischen Betrachtungen der theoretische Endwert (100% bzw. 0%) nie erreicht werden kann. Daher bestimmt man erfindungsgemäß die Verweilzeitverteilungsbreite näherungsweise aus der Zeitspanne vom ersten Nachweis des Markers (z.B. Aluminium) am Austrag (5% der theoretisch erreichbaren Menge) bis zu dem Zeitpunkt, wenn 95% des theoretisch erreichbaren Endwertes erreicht ist (= "Dauer des Anstieges"). Diese Zeit ist um so größer, je stärker ein Kneter für eine Rückvermischung ausgelegt ist.

Die analoge Betrachtung gilt für das Ausschalten der Zudosierung: Nach einer gewissen Zeit, bei der der Tracergehalt noch stabil bleibt, fällt der Tracergehalt ab. Hier wird die Zeit vom Beginn des Abfallens der Tracerkonzentration (95%) bis zu dem Zeitpunkt betrachtet, an dem die Konzentration auf 5% des ursprünglichen Wertes abgefallen ist (= "Dauer des Abfalles").

Ein gutes Maß für die Rückvermischungseigenschaft eines Kneters lässt sich dann durch den Quotienten als Rückvermischungsverhältnis ausdrücken:

Start der Tracerdosierung:

Rückvermischung A = Dauer des Anstieges / Verweilzeit im Kneter

bzw.

Ende der Tracerdosierung:

Rückvermischung B = Dauer des Abfalles / Verweilzeit im Kneter

Erfindungsgemäß wird der Mittelwert aus beiden Bestimmungen verwendet.
Die nachfolgenden Beispiele sollen die Erfindung näher erläutern.

Beispiel 1

Zusammensetzung der eingesetzten Reaktionslösung:

Durch kontinuierliches Mischen von entionisiertem Wasser, Natronlauge (50Gew.-%) und Acrylsäure wird eine 39 Gew.-%ige Acrylsäure/Natriumacrylatlösung hergestellt so dass der Neutralisationsgrad 75mol-% entspricht. Die verwendete Acrylsäure entspricht folgender Spezifikation: mind. 99,5 Gew.-% Acrylsäure, max. 0,1 Gew.-% Wasser, max. 500 ppm Diacrylsäure, 200 ppm Hydrochinomonomethylether (MEHQ), < 2000 ppm Essigsäure, < 600 ppm Propionsäure). Die Monomerlösung wird nach dem Mischen der Komponenten durch einen Wärmetauscher kontinuierlich

auf eine Temperatur von 20°C abgekühlt und mit Stickstoff von Sauerstoff gestrippt.

Zur Initiierung der radikalischen Polymerisation werden folgende Lösungen eingesetzt: 0,08Gew.-% Wasserstoffperoxid und 15 Gew.-% Natriumperoxodisulfat in Wasser sowie 1% Ascorbinsäure in Wasser.

Als mehrfach ethylenisch ungesättigter Vernetzer wird Polyethylenglykol-400-diacrylat (Cray Valley) in einer Einsatzmenge von 0,45 Gew.-% bezogen auf die in der Reaktionslösung vorhandenen Monomere - ausgedrückt als Acrylsäure - verwendet.

Die einzelnen Komponenten werden kontinuierlich in den Reaktor List Contikneter mit Volumen 6.3m$^3$ (Fa. List, Arisdorf, Schweiz) in folgenden Mengen eindosiert:

| | |
|---|---|
| 18 t/h | Monomerlösung |
| 81 kg/h | Polyethylenglycol 400 diacrylat |
| 15 kg/h | Wasserstoffperoxidlösung/Natriumperoxodisulfat |
| 5 kg/h | Ascorbinsäurelösung |

Die Reaktionslösung hatte am Zulauf eine Temperatur von 23,5°C. Der Reaktor wird mit einer Drehzahl der Wellen von 38rpm betrieben. Die Polymerisation verläuft relativ schleppend und muss gegebenenfalls durch Erhöhen der Initiatormenge wieder gestartet werden. Die Verweilzeit der Reaktionsmischung im Reaktor betrug 15 min.

Erhalten wurde ein klebriges Produkt, das einen erhöhten Anteil an Agglomerate aufwies. Unter Agglomerate sind grobe Gelpartikel der Größe > 5 cm (Durchmesser) zu verstehen. Der Agglomerateanteil lag bei mehr als 200 Agglomerate(> 5 cm )/h. Der Anteil an Agglomeraten >10 mm betrug etwa 0.9 to/h bezogen auf trockne Agglomerate. Im erhaltenen Produktgel wurde analytisch ein Restacrylsäuregehalt von 12,3 Gew.-% und ein Feststoffgehalt von 41,0 Gew.-% gefunden. Das Gel wurde getrocknet, gemahlen und durch Sieben eine Korngrößenfraktion von 100 - 850 μm eingestellt. Das getrocknete Polymer hat einen Restmonomergehalt von 6.000 ppm, einen Wassergehalt von 4,5% und eine Zentrifugenretention von 37,6g/g. Der pH-Wert des Polymers betrug 6,1.

Für die Oberflächennachvernetzung wird eine Lösung von 15 Gew.-% Ethylenglycoldiglycidylether gelöst in einer Mischung aus 33 Gew.-% 1 ,2-Propylenglykol und 67 Gew.-% Wasser verwendet. Der Superabsorber wird anschließend kontinuierlich als Pulver (7000kg/h) in einem Schugi-Flexomix mit 210 kg/h auf der Oberfläche behandelt. Nach dem Aufsprühen der Vernetzer-Lösung erfolgt ein Temperaturbehandlungsschritt in einem nachgeschalteten Trockner bei einer Temperatur von 150°C über einen Zeitraum von 60 Minuten.

Das so erhaltene Polymer zeigt eine AUL (0,7psi)= 15,4 g/g und eine CRC= 31,6g/g.

Beispiel 2

Es wurde analog den Angaben zu Beispiel 1 verfahren, nur dass im vorliegenden Fall die Menge der zudosierten Initiatorlösung auf 70,8 kg/h und die Menge an Ascorbinsäurelösung auf 20 kg/h erhöht wurde. Die Polymerisation startete schon während des Mischens zügig.

Erhalten wurde ein krümeliges Produkt, das einen leicht reduzierten Agglomerateanteil von etwa 120 Agglomerate(> 5cm)/h aufwies. Der Anteil an Agglomeraten >10 mm betrug etwa 0.4 to/h bezogen auf trockne Agglomerate. Das Gel wurde getrocknet, gemahlen und durch Sieben eine Korngrößenfraktion von 100 - 850 μm erhalten. Das getrocknete Polymer besaß einen Restmonomergehalt von 350 ppm und eine Zentrifugenretentionskapazität von 38,8 g/g. Der pH-Wert des Polymers betrug 6,1.

Das so erhaltene Polymer wurde einer Oberflächennachvernetzung unterzogen wie in Beispiel 1 beschrieben. Das so erhaltene Polymer zeigt eine AUL (0,7psi)= 18,2 g/g und eine CRC=30,6g/g.

Beispiel 3

Es wurde analog den Angaben zu Beispiel 1 verfahren, nur dass die im vorliegenden Fall eingesetzte Acrylsäure eine Spezifikation von 120 ppm MEHQ aufwies. Zum Polymerisationsstart wurden wie in Beispiel 1 eine Menge von 15,5 kg / h Initiatorlösung zudosiert. Die Spitzentemperatur wurde in 3 Minuten erreicht.

Erhalten wurde ein fein zerteiltes, krümeliges Hydrogel, welches praktisch keine Agglomerate mehr aufwies. Das Gel wurde getrocknet, gemahlen und auf eine Korngrößenverteilung von 100 - 800 μm eingestellt. Das getrocknete Polymer besaß einen Restmonomergehalt von 150 ppm sowie eine Zentrifugenretentionskapazität von 37,6 g/g. Der pH-Wert des Polymers betrug 6,1.

Das so erhaltene Polymer wurde einer Oberflächennachvernetzung unterzogen wie in Beispiel 1 beschrieben. Das so erhaltene Polymer zeigt eine AUL (0,7psi)= 24,0 g/g und eine CRC=29,8g/g.

Beispiel 4

Es wurde analog den Angaben zu Beispiel 1 verfahren, nur dass die im vorliegenden Fall eingesetzte Acrylsäure 50 ppm MEHQ enthielt. Zum Polymerisationsstart wurden wie in Beispiel 1 eine Menge von 15,5 kg / h Initiatorlösung zudosiert.

Erhalten wurde ein fein zerteiltes, krümeliges Hydrogel, das praktisch keine Agglomerate mehr aufwies. Das Gel wurde getrocknet, gemahlen und durch Sieben eine Korngrößenfraktion von 100 - 800 μm erhalten. Das getrocknete Polymer besaß eine Restmonomergehalt von 160 ppm und eine Zentrifugenretentionskapazität von 36,9 g/g. Der pH-Wert des Polymers betrug 6,1.

Das so erhaltene Polymer wurde einer Oberflächennachvernetzung unterzogen wie in Beispiel 1 beschrieben. Das so erhaltene Polymer zeigt eine AUL (0,7psi)= 25,3 g/g und eine CRC=30,9g/g.

Beispiel 5

Durch kontinuierliches Mischen von Wasser, Natronlauge (50Gew.-%) und Acrylsäure wird eine 38,8 Gew.-%ige Acrylsäure/Natriumacrylatlösung hergestellt so dass der Neutralisationsgrad 71,3mol-% entspricht. Die Monomerlösung wird nach dem Mischen der Komponenten durch einen Wärmetauscher kontinuierlich auf eine Temperatur von 20°C abgekühlt und mit Stickstoff entgast.

Als Initiator der radikalischen Polymerisation werden folgende Lösungen eingesetzt: 0,08Gew.-% Wasserstoffperoxid und 15 Gew.-% Natriumperoxodisulfat in Wasser sowie 1 % Ascorbinsäure in Wasser.

Als mehrfach ethylenisch ungesättigte Vernetzer werden 0,8 Gew.-% Polyethylenglykol-400-diacrylat (Cray Valley) bezogen auf die in der Reaktionslösung vorhandenen Monomere verwendet.
Die einzelnen Komponenten werden kontinuierlich in den Reaktor List Contikneter mit Volumen 6.3m$^3$ (Fa. List, Arisdorf, Schweiz) in folgenden Mengen eindosiert:

| | |
|---|---|
| 18 t/h | Monomerlösung |
| 55,8 kg/h | Polyethylenglycol 400 diacrylat |
| 55,8 kg/h | Wasserstoffperoxid-/ Natriumperoxodisulfatlösung |
| 18,9 kg/h | Ascorbinsäurelösung |

Die Reaktionslösung hatte am Zulauf eine Temperatur von 29 °C. Der Reaktor wird mit einer Drehzahl der Wellen von 38 rpm betrieben. 300 mm entfernt von der Zugabestelle der Rohstoffe in Richtung des Reaktoraustrages befindet sich im Reaktor eine Temperaturmessstelle (entsprechend 660 mm Abstand zur Stirnwand des Reaktors). An dieser Stelle wird die Temperatur über die Zeit verfolgt. Während der Polymerisation wird in den Reaktor zusätzlich Superabsorberfeinkorn mit einer Partikelgröße <200μm und einer Zugaberate 800kg/h zu dem Polymerisat (bei einem Umsatz >99%) zugegeben. Die Verweilzeit der Reaktionsmischung im Reaktor betrug 15 min.

Der Reaktorfüllstand wird während des Betriebes mittels einer Öffnung (eines Wehres) eingestellt, welches im hinteren Teil des Reaktors an der Seite angebracht ist. Die Gelaustragsfläche (voll geöffnet: 660mm X 400mm 0,264m$^2$)) wird auf ein Maß 420mm X 400mm (0,168m$^2$) geöffnet. Dadurch stellt sich ein Reaktorfüllstand von 60% der maximalen Füllhöhe ein.

Die an oben genannter Temperaturmessstelle beobachtete Temperatur variiert im Bereich von Stunden in einem Bereich von 70°C - 100°C.

Bei dieser Einstellung finden sich im Reaktoraustrag ca. 0.75 Tonnen/h (Gelpartikel bezogen auf Trockengewicht) mit einem Durchmesser > 10mm. Der Agglomerateanteil lag bei etwa 8 Agglomerate(> 5 cm)/h.

Beim Trocknen, Mahlen und Sieben der Gelpartikel < 10mm Größe wird nach Einstellen der Korngrößenverteilung auf 100 μm - 850 μm eine Zentrifugenretention von 38,1g/g erhalten.

Das so erhaltene Grundpolymer wird anschließend einer Oberflächennachvernetzung unterworfen wie in Beispiel 1 beschrieben.

Bei dem so erhaltenen Produkt lässt sich die Qualität über die Summe aus CRC + AUL(40g/cm$^3$) abschätzen. Für das hier erhaltene Produkt ergeben sich folgende Werte:

CRC=30,7g/g
AUL(40g/cm$^3$)=26,1g/g
=> CRC + AUL(40g/cm$^3$)= 56,8g/g

Beispiel 6

Es wurde analog zum Beispiel 5 verfahren, jedoch wurde das Wehr am Reaktor auf eine Fläche von 180mm X 400mm (0,072$m^2$) geschlossen. Dadurch erhöht sich der Füllstand im Reaktor auf etwa 85% der maximalen Füllhöhe. Bei dieser Einstellung verringert sich der Anteil an feuchten Partikeln mit einem Durchmesser >5mm auf unter 0,1 Tonnen/h. Die an der Temperaturmessstelle im Reaktor gemessene Temperatur lag im Bereich von Stunden recht konstant im Bereich von 85°C - 100°C.

Beim Trocknen, Mahlen und Sieben der Gelpartikel < 10mm Größe wird nach Einstellen der Korngrößenverteilung auf 100μm-850μm eine Zentrifugenretention von 38,4g/g erhalten.

Nach Oberflächennachvernetzung dieses Polymeren analog Beispiel 1 ergaben sich folgende Absorptionsdaten:

CRC=31,3g/g
AUL(40g/$cm^3$)=30,0g/g
=> CRC + AUL(40g/$cm^3$)= 61,3g/g

Beispiel 7:

Es wurde analog dem Beispiel 6 verfahren, jedoch wurde auf die Zugabe von Superabsorberfeinkorn zu dem Polymergel verzichtet.

Es zeigte sich, dass der Füllstand im Reaktor dadurch auf 80% abnahm und die an der Temperaturmessstelle im Reaktor gemessene Temperatur im Zeitraum von Stunden in einem Bereich von 70°C-100°C variierte. Der Anteil an feuchten Partikeln mit einem Durchmesser >5mm betrug 0,2 Tonnen/h.

Das so erhaltene Basepolymer zeigte eine CRC von 37,8g/g.

Nach der Oberflächenvernetzung analog Beispiel 1 ergaben sich folgende Absorptionswerte:

CRC=29,6g/g
AUL(40g/$cm^3$)=28,4g/g
=> CRC + AUL(40g/$cm^3$)= 58,0g/g

Beispiel 8:

Es wurde analog dem Beispiel 5 verfahren, jedoch wurde auf die Zugabe von Superabsorberfeinkorn verzichtet.

Es zeigte sich, dass der Füllstand im Reaktor dadurch auf 55% abnahm und die an der Temperaturmessstelle im Reaktor gemessene Temperatur im Zeitraum von Stunden in einem Bereich von 50°C-100°C variierte.

Bei dieser Einstellung fanden sich im Reaktoraustrag 0,85 Tonnen/h Gelpartikel mit einem Durchmesser > 10mm. Der Agglomerateanteil lag bei mehr als 50 Agglomerate(> 5 cm)/h. Das nach Trocknung, Mahlung und Sieben erhaltene Grundpolymer zeigte eine CRC von 37,4g/g.

Nach der Oberflächenvernetzung analog Beispiel 1 ergaben sich folgende Absorptionswerte:

CRC=29,5g/g
AUL(40g/$cm^3$)=25,4g/g
=> CRC + AUL(40g/$cm^3$)= 54,9g/g

Beispiel 9:

Hier wird analog zu dem Beispiel 5 verfahren.

Nachdem die kontinuierliche Polymerisation im Kneter angefahren wurde und mindestens 1 Stunde stabil läuft, wird eine Zudosierung einer 1%igen Aluminiumsulfatösung in entionisiertem Wasser am Eingang des Knetreaktors gestartet.

Am Ausgang des Kneters werden alle 15 Sekunden ca. 200g Gelproben gezogen. Diese werden bei 180°C getrocknet und gemahlen. An diesen Proben wird der Gehalt an Aluminium analytisch bestimmt und als prozentualer Anteil des maximal möglichen Gehaltes gegen die Zeit aufgetragen. Es werden folgende Ergebnisse ermittelt:

Start der Zudosierung:

Zeitraum vom Start bis zum Erreichen des 50% Wertes: 15,0 min
Zeitraum des Anstieges von 5% auf 95% des Aluminiumgehaltes: 4,0 min

Beenden der Zudosierung:

Zeitraum vom Beenden bis zum Erreichen des 50% Wertes: 15,0 min
Zeitraum des Abfalles von 95% auf 5% des Aluminiumgehaltes: 4,0 min

$$\Rightarrow A/C = \frac{4{,}0\,\text{min}}{15{,}0\,\text{min}} = 0{,}267$$

$$\Rightarrow B/C = \frac{4{,}0\,\text{min}}{15{,}0\,\text{min}} = 0{,}267$$

In diesem Fall liegt das Rückvermischungsverhältnis bei (A+B)/2C = 0,267

Beispiel 10:

Hier wird analog zu dem Beispiel 5 verfahren, allerdings wird die Drehzahl der Kneterwellen auf 45 rpm erhöht. Da hierdurch die Transportleistung der Kneterwellen je nach Konstruktion der daran angebrachten Knethaken mehr oder weniger stark ansteigt oder abfällt (abhängig vom Anteil der vorwärts bzw. rückwärts fördernden Knethaken), wird der Füllstand in dem Knetreaktor durch nachjustieren der Wehröffnung am Kneteraustrag bei 60 % konstant gehalten.

Nachdem die kontinuierliche Polymerisation im Kneter angefahren wurde und mindestens 1 Stunde stabil läuft, wird eine Zudosierung einer 1%igen Aluminiumsulfatösung in entionisiertem Wasser am Eingang des Knetreaktors gestartet.

Am Ausgang des Kneters werden alle 15 Sekunden ca. 200g Gelproben gezogen. Diese werden bei 180°C getrocknet und gemahlen. An diesen Proben wird der Gehalt an Aluminium analytisch bestimmt und als prozentualer Anteil des maximal möglichen Gehaltes gegen die Zeit aufgetragen. Es werden folgende Ergebnisse ermittelt:

Start der Zudosierung:

Zeitraum vom Start bis zum Erreichen des 50% Wertes: 15,0 min
Zeitraum des Anstieges von 5% auf 95% des Aluminiumgehaltes: 5,25 min

Beenden der Zudosierung:

Zeitraum vom Beenden bis zum Erreichen des 50% Wertes: 15,0 min
Zeitraum des Abfalles von 95% auf 5% des Aluminiumgehaltes: 5,5 min

$$\Rightarrow A/C = \frac{5{,}25\,\text{min}}{15{,}0\,\text{min}} = 0{,}350$$

$$\Rightarrow B/C = \frac{5{,}5\,\text{min}}{15{,}0\,\text{min}} = 0{,}367$$

In diesem Fall liegt das Rückvermischungsverhältnis bei (A+B)/2C = 0,359

Nach dem Aufarbeiten und weiteren oberflächennachvernetzen der so erhaltenen Superabsorber analog zu dem Beispiel 5 wird ein Granulat mit folgenden Eigenschaften erhalten:

AUL(40g/cm$^2$) = 24,7 g/g
CRC = 30,5 g/g
=> CRC + AUL = 55,2 g/g

Beispiel 11

Hier wird analog zu dem Beispiel 5 verfahren, allerdings wird die Drehzahl der Kneterwellen auf 33 rpm erniedrigt. Da hierdurch die Transportleistung der Kneterwellen je nach Konstruktion der daran angebrachten Knethaken mehr oder weniger stark ansteigt oder abfällt (abhängig vom Anteil der vorwärts bzw. rückwärts fördernden Knethaken), wird der Füllstand in dem Knetreaktor durch nachjustieren der Wehröffnung am Kneteraustrag bei 60 % konstant gehalten.

Nachdem die kontinuierliche Polymerisation im Kneter angefahren wurde und mindestens 1 Stunde stabil läuft, wird eine Zudosierung einer 1%igen Aluminiumsulfatösung in entionisiertem Wasser am Eingang des Knetreaktors gestartet.

Am Ausgang des Kneters werden alle 15 Sekunden ca. 200g Gelproben gezogen. Diese werden bei 180°C getrocknet und gemahlen. An diesen Proben wird der Gehalt an Aluminium analytisch bestimmt und als prozentualer Anteil des maximal möglichen Gehaltes gegen die Zeit aufgetragen. Es werden folgende Ergebnisse ermittelt:

Start der Zudosierung:

Zeitraum vom Start bis zum Erreichen des 50% Wertes: 15,0 min
Zeitraum des Anstieges von 5% auf 95% des Aluminiumgehaltes: 3,50 min

Beenden der Zudosierung:

Zeitraum vom Beenden bis zum Erreichen des 50% Wertes: 15,0 min
Zeitraum des Abfalles von 95% auf 5% des Aluminiumgehaltes: 3,75 min

$$\Rightarrow A/C = \frac{3{,}50\,\text{min}}{15{,}0\,\text{min}} = 0{,}233$$

$$\Rightarrow B/C = \frac{3{,}75\,\text{min}}{15{,}0\,\text{min}} = 0{,}250$$

In diesem Fall liegt das Rückvermischungsverhältnis bei (A+B)/2C = 0,242

Nach dem Aufarbeiten und weiteren Oberflächennachvernetzen der so erhaltenen Superabsorber analog zu dem Beispiel 5 wird ein Granulat mit folgenden Eigenschaften erhalten:

AUL(40g/$cm^2$) = 26,3 g/g
CRC = 30,8 g/g
=> CRC + AUL = 57,1 g/g

An obigen Beispielen 9 bis 11 ist zu sehen, dass sich die Produktqualität bei zunehmender Rückvermischung (zunehmendes Rückvermischungsverhältnis) verschlechtert (Qualitätsparameter CRC+AUL wird kleiner).

## Patentansprüche

1. Verfahren zur kontinuierlichen Herstellung von vernetzten, feinteiligen, gelförmigen Polymerisaten durch Copolymerisieren von

   a) wasserlöslichen, monoethylenisch ungesättigten Monomeren,
   b) 0,001 bis 5 Mol-% bezogen auf die Monomere (a), mindestens zwei polymerisierbare Gruppen enthaltenden Monomeren

   in einem Kneter mit einer Förderung der am Anfang des Kneters zugegebenen Stoffe in axialer Richtung zum Ende des Kneters, **dadurch gekennzeichnet, dass** die an einer Temperaturmessstelle in der Kneterwandung bei einem Abstand von 5 bis 6 % der Länge des inneren Reaktorraums in Richtung Produktaustrag von der Monomerdosierungsstelle gemessene Temperatur mehr als 65°C beträgt.

2. Verfahren nach Anspruch 1, wobei der Kneter mit mindestens zwei achsparallel rotierenden Wellen, wobei sich auf den Wellen mehrere Knet- und Transportelemente befinden, ausgestattet ist.

3. Verfahren nach Anspruch 1 oder 2, **dadurch gekennzeichnet, dass** die an einer Temperaturmessstelle in der Kneterwandung bei einem Abstand von 5 bis 6 % der Länge des inneren Reaktorraums in Richtung Produktaustrag von der Monomerdosierungsstelle gemessene Temperatur mehr als 70°C beträgt.

4. Verfahren nach einem der Ansprüche 1 bis 3, **dadurch gekennzeichnet, dass** das Reaktorvolumen mindestens 0,5 $m^3$ beträgt.

5. Verfahren nach einem der Ansprüche 1 bis 4, **dadurch gekennzeichnet, dass** der Massendurchsatz an wasserlöslichen, monoethylenisch ungesättigten Monomeren mindestens 500 kg/h beträgt.

6. Verfahren nach einem der Ansprüche 1 bis 5, **dadurch gekennzeichnet, dass** die Herstellung unter Inertgas durchgeführt wird, wobei das Inertgas Wasserdampf, Kohlendioxid, Stickstoff oder eine Mischung enthaltend mindestens ein Gas ausgewählt aus der Liste Wasserdampf, Kohlendioxid und Stickstoff ist.

7. Verfahren nach einem der Ansprüche 1 bis 6, **dadurch gekennzeichnet, dass** die Herstellung unter einem Druck von 100 - 800 mbar durchgeführt wird.

8. Verfahren nach einem der Ansprüche 1 bis 7, **dadurch gekennzeichnet, dass** die maximale Temperatur bei der Polymerisation zwischen 50°C und 100°C liegt.

9. Verfahren nach einem der Ansprüche 1 bis 8, **dadurch gekennzeichnet, dass** der Anteil der Wärmeabfuhr durch Verdampfung von Wasser aus dem Reaktionsgemisch mindestens 5 % der Reaktionswärme und der Anteil der Wärmeabfuhr durch Produktaustrag mindestens 25 % der Reaktionswärme beträgt

10. Verfahren nach einem der Ansprüche 1 bis 9, **dadurch gekennzeichnet, dass** die Reaktorinnenwand des Kneters und/oder mindestens eine Welle gekühlt ist.

11. Verfahren nach den Ansprüchen 2 bis 10, **dadurch gekennzeichnet, dass** die Wellen des Kneters gegenläufig rotieren.

12. Verfahren nach den Ansprüchen 1 bis 11, **dadurch gekennzeichnet, dass** die die Monomere a) aus der Gruppe Acrylsäure, Methacrylsäure sowie den Alkali- oder Ammoniumsalzen dieser Säuren, Acrylamid und/oder Methacrylamid ausgewählt sind.

13. Verfahren nach den Ansprüchen 1 bis 12, **dadurch gekennzeichnet, dass** die Monomere b) aus mindestens 3 ethylenisch ungesättigte Doppelbindungen aufweisen und/oder (Meth)acrylsäureester sind.

14. Verfahren nach den Ansprüchen 1 bis 13, **dadurch gekennzeichnet, dass** der Halbether eines Hydrochinons MEHQ oder ein Tocopherol ist.

15. Verfahren nach den Ansprüchen 1 bis 14, **dadurch gekennzeichnet, dass** der Restmonomergehalt des resultierenden vernetzten, feinteiligen, gelförmigen Polymerisats unter 170 ppm beträgt.

16. Verfahren nach den Ansprüchen 1 bis 15, **dadurch gekennzeichnet, dass** die Spitzentemperatur in weniger wie 5 Minuten erreicht wird.

17. Verfahren nach einem der Ansprüche 1 bis 16, **dadurch gekennzeichnet, dass** das vernetzte, feinteilige, gelförmige Polymerisat nachbehandelt wird umfassend zumindest einen der Schritte Trocknung, Mahlung, Siebung, Oberflächennachvemetzung, Oberflächenbehandlung.

Europäisches Patentamt
European Patent Office
Office européen des brevets

# EUROPÄISCHER RECHERCHENBERICHT

Nummer der Anmeldung
EP 09 17 7995

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 01/38402 A (BASF AKTIENGESELLSCHAFT; HEIDE, WILFRIED; WICKEL, STEFAN; DANIEL, THOM) 31. Mai 2001 (2001-05-31) * Beispiel 2 * ----- | 1-17 | INV. C08F2/01 B01J19/00 C08F2/10 C08F6/10 C08J3/12 C08J3/24 C08F220/06 C08F220/56 B01J8/10 |
| X | WO 02/32964 A (BASF AKTIENGESELLSCHAFT; HEIDE, WILFRIED; WICKEL, STEFAN; DANIEL, THOM) 25. April 2002 (2002-04-25) * Beispiel * ----- | 1-17 | |
| X,D | DE 34 32 690 A1 (NIPPON SHOKUBAI KAGAKU KOGYO CO.LTD; NIPPON SHOKUBAI KAGAKU KOGYO CO.) 21. März 1985 (1985-03-21) * Beispiele 1,2 * ----- | 1-17 | |
| X,D | WO 03/051940 A (NIPPON SHOKUBAI CO., LTD; NAKAHARA, SEI; ISHIZAKI, KUNIHIKO; FUJIMARU,) 26. Juni 2003 (2003-06-26) * Seite 26, Zeile 9 - Zeile 10 * ----- | 1-17 | |
| X | US 2004/110897 A1 (SAKAMOTO SHIGERU [JP] ET AL) 10. Juni 2004 (2004-06-10) * Beispiele 1-6,8-13 * ----- | 1-17 | RECHERCHIERTE SACHGEBIETE (IPC) C08F B01J C08J |

Der vorliegende Recherchenbericht wurde für alle Patentansprüche erstellt

2

| Recherchenort | Abschlußdatum der Recherche | Prüfer |
|---|---|---|
| München | 2. Februar 2010 | Gold, Josef |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 09 17 7995

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-02-2010

| Im Recherchenbericht angeführtes Patentdokument | Datum der Veröffentlichung | Mitglied(er) der Patentfamilie | Datum der Veröffentlichung |
|---|---|---|---|
| WO 0138402 A | 31-05-2001 | AT 260937 T | 15-03-2004 |
| | | AT 386057 T | 15-03-2008 |
| | | BR 0015680 A | 06-08-2002 |
| | | CA 2390871 A1 | 31-05-2001 |
| | | CN 1391582 A | 15-01-2003 |
| | | DE 19955861 A1 | 23-05-2001 |
| | | EP 1237937 A1 | 11-09-2002 |
| | | ES 2216983 T3 | 01-11-2004 |
| | | JP 2003514961 T | 22-04-2003 |
| | | MX PA02004034 A | 11-10-2002 |
| | | TR 200400487 T4 | 21-04-2004 |
| | | US 6710141 B1 | 23-03-2004 |
| WO 0232964 A | 25-04-2002 | AT 286915 T | 15-01-2005 |
| | | AU 1055302 A | 29-04-2002 |
| | | BR 0114730 A | 06-07-2004 |
| | | CN 1469885 A | 21-01-2004 |
| | | CZ 20031084 A3 | 17-09-2003 |
| | | EP 1326898 A2 | 16-07-2003 |
| | | ES 2234902 T3 | 01-07-2005 |
| | | JP 4018536 B2 | 05-12-2007 |
| | | JP 2004511633 T | 15-04-2004 |
| | | US 2004014901 A1 | 22-01-2004 |
| | | ZA 200303812 A | 13-08-2004 |
| DE 3432690 A1 | 21-03-1985 | CA 1258338 A1 | 08-08-1989 |
| | | FR 2551445 A1 | 08-03-1985 |
| | | GB 2146343 A | 17-04-1985 |
| | | JP 1592365 C | 14-12-1990 |
| | | JP 2014361 B | 06-04-1990 |
| | | JP 60055002 A | 29-03-1985 |
| WO 03051940 A | 26-06-2003 | BR 0206696 A | 03-02-2004 |
| | | CN 1610707 A | 27-04-2005 |
| | | CN 1831019 A | 13-09-2006 |
| | | EP 1456259 A1 | 15-09-2004 |
| | | US 2004110914 A1 | 10-06-2004 |
| US 2004110897 A1 | 10-06-2004 | EP 1455853 A1 | 15-09-2004 |
| | | WO 03051415 A1 | 26-06-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3432690
- EP 223063 A
- WO 0138402 A
- WO 0322896 A
- WO 03051940 A
- US 5041496 A
- EP 530438 A
- EP 547847 A
- EP 559476 A
- EP 632068 A
- WO 9321237 A
- WO 03104299 A
- WO 03104300 A
- WO 03104301 A
- DE 10331450
- DE 10331456
- DE 10355401
- DE 19543368 A
- DE 19646484 A
- WO 9015830 A
- WO 0232962 A
- DE 19941423 A
- EP 686650 A
- WO 0145758 A
- EP 083022 A
- EP 543303 A
- EP 937736 A
- DE 3314019 C
- DE 3523617 C
- EP 450922 A
- DE 10204938 A
- US 6239230 B
- EP 1199327 A
- DE 4020780 A
- DE 198075022 A
- DE 19807992 A
- DE 198545732 A
- DE 19854574 A
- DE 10204937 A
- DE 10334584
- WO 03031482 A
- CH 664704 A
- EP 517068 A
- WO 9712666 A
- DE 2123956 A
- EP 603525 A
- DE 19536944 A
- DE 4118884 A


### In der Beschreibung aufgeführte Nicht-Patentliteratur


- **F.L. Buchholz ; A.T. Graham.** Modern Superabsorbent Polymer Technology. Wiley-VCH, 1998
- Ullmann's Encyclopedia of Industrial Chemistry. vol. 35, 73-103